# EUROPEAN PATENT APPLICATION

(11) **EP 4 261 937 A1**
(43) Date of publication of application: **18.10.2023**
(21) Application number: 21903074.9
(22) Date of filing: 04.11.2021
(51) Int. Cl.: H01M 4/14, H01M 4/68, H01M 10/12, H01M 50/541

(54) **BIPOLAR BATTERY**

(30) Priority: 10.12.2020 JP 2020204826; 10.02.2021 JP 2021020216
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA Hiroki, Tokyo 100-8322 (JP); NAKAJIMA Yasuo, Tokyo 100-8322 (JP); SUYAMA Kenichi, Tokyo 100-8322 (JP); TANAKA Akira, Tokyo 100-8322 (JP); TAIRA Yoshinobu, Jyoban-shimofunao-machi, Iwaki-shi, Fukushima 972- 8501 (JP); HIROTA Kenji, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/040633
(87) International publication number: WO 2022/123970

(57) **Abstract**

To provide a bipolar lead-acid storage battery that prevents an electrolytic solution from reaching a negative electrode side as much as possible to greatly suppress the occurrence of liquid junction even when the electrolytic solution enters communication holes, so that the battery performance is less likely to deteriorate. A bipolar storage battery (1) including a bipolar electrode (130) including a positive electrode (120), a negative electrode (110), and a bipolar plate (111) provided with the positive electrode (120) on one surface and the negative electrode (110) on another surface, in which the bipolar plate (111) has a communication hole (150) communicating the one surface and the another surface, a positive current collector (101) and a negative current collector (102) are electrically joined through the communication hole (150), and a partition means (160, 170) of partitioning a space is provided in the space between a joint portion (J) between the positive current collector (101) and the negative current collector (102) and an inner surface of the communication hole (150).

## Description

### Technical Field

Embodiments of the present invention relate to a bipolar storage battery.

### Background Art

In recent years, power generation facilities using natural energy such as sunlight and wind power have increased. In such power generation facilities, since the power generation amount cannot be controlled, the power load is leveled by using a storage battery. That is, when the power generation amount is larger than the consumption amount, the difference is charged into the storage battery, and when the power generation amount is smaller than the consumption amount, the difference is discharged from the storage battery. As the above-described storage battery, a lead-acid storage battery is frequently used from the viewpoint of economic efficiency, safety, and the like. As such a conventional lead-acid storage battery, for example, one described in PTL 1 below is known.

In the lead-acid storage battery described in PTL 1, a substrate (bipolar plate) made of resin is attached inside a frame (rim) made of resin having a picture frame shape. A positive lead layer and a negative lead layer are disposed on one surface and another surface of the substrate. A positive active material layer is adjacent to the positive lead layer. A negative active material layer is adjacent to the negative lead layer. In addition, a glass mat (electrolytic layer) containing an electrolytic solution is disposed inside a spacer made of resin having a picture frame shape. Then, a plurality of frames and spacers is alternately stacked and assembled.

Further, the positive lead layer and the negative lead layer are directly joined in a plurality of perforations formed in the substrate. That is, the lead-acid storage battery described in PTL 1 is a bipolar lead-acid storage battery in which a plurality of substrates having perforations (communication holes) for communicating one surface side and another surface side and cell members is alternately stacked. The cell member includes a positive electrode in which the positive active material layer is provided on the positive lead layer, a negative electrode in which the negative active material layer is provided on the negative lead layer, and the electrolytic layer interposed between the positive electrode and the negative electrode, the positive lead layer of one cell member and the negative lead layer of another cell member enter the inside of the perforations of the substrate and joined, and the cell members are connected in series.

### Citation List

### Patent Literature

PTL 1: JP 6124894 B2

### Summary of Invention

### Technical Problem

In the lead-acid storage battery described in aforementioned PTL 1, the substrate and the lead layer are laminated by a method such as plating. However, in the adhesion by a method such as plating, for example, only an anchor effect can be expected in the adhesion between the substrate and the lead layer, and the reliability of the manufactured lead-acid storage battery is low. Therefore, for example, a method is conceivable in which an adhesive is interposed between the substrate and the lead layer to bond them.

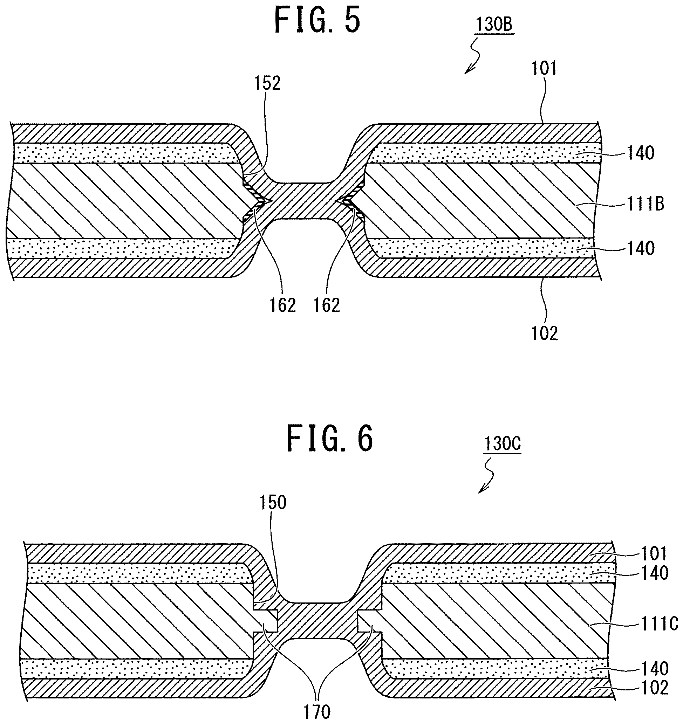

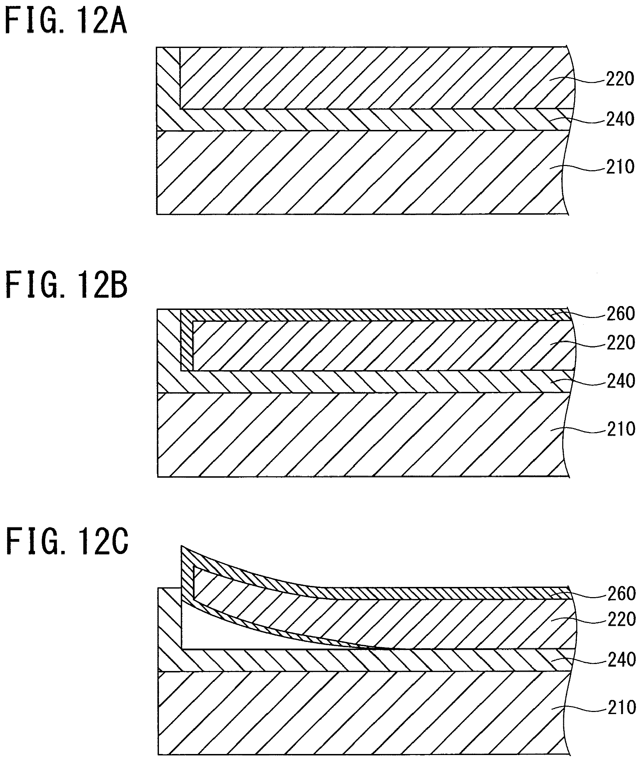

Such a state is illustrated in FIG. 12. The lead layers bonded to the substrate using an adhesive include the positive lead layer and the negative lead layer, and in FIG. 6, the positive lead layer is described as an example. That is, as illustrated in FIG. 12A, the positive electrode of this bipolar electrode is configured such that a positive lead layer 220 is disposed on one surface of a substrate 210 made of resin with an adhesive layer 240 interposed therebetween, and a positive active material layer (not illustrated) is disposed on the positive lead layer 220.

In the bipolar lead-acid storage battery as described above, the positive lead layer 220 can be corroded by sulfuric acid contained in the electrolytic solution to generate a coating film 260 of a corrosion product (lead oxide) on the front surface of the positive lead layer 220 (see FIG. 12B). Then, there has been a possibility that the development of the coating film 260 of the corrosion product causes elongation (growth) in the positive lead layer 220.

In addition, there has been a possibility that the positive lead layer 220 and the adhesive layer 240 are separated due to this growth, the electrolytic solution infiltrates the interface between the positive lead layer 220 and the adhesive layer 240, and the corrosion of the positive lead layer 220 due to sulfuric acid further proceeds (see FIG. 12C). As a result, when corrosion reaches, for example, the back surface of the positive lead layer 220 (the surface facing the substrate 210), there has been a case where the electrolytic solution infiltrates through the perforations (communication holes) to cause a short circuit or the like, and the performance of the battery deteriorates.

In addition, in order to directly join the positive lead layer and the negative lead layer inside the perforations, for example, resistance welding is used. However, when the positive lead layer and the negative lead layer are not appropriately welded due to various factors, there is a possibility that joining failure occurs.

When the electrolytic solution enters between the substrate and the positive lead layer due to the joining failure, there has been a possibility that the electrolytic solution enters between the substrate and the negative lead layer via, for example, the perforations (communication holes) to cause liquid junction, which causes a reduction in voltage and deterioration of the performance.

An object of the present invention is to provide a bipolar storage battery that prevents an electrolytic solution from reaching a negative electrode side as much as possible to greatly suppress the occurrence of liquid junction even when the electrolytic solution enters communication holes when growth occurs in a positive electrode due to corrosion by sulfuric acid contained in the electrolytic solution, so that the battery performance is less likely to deteriorate.

### Solution to Problem

A bipolar storage battery according to an aspect of the present invention is a bipolar storage battery including: a bipolar electrode including a positive electrode, a negative electrode, and a bipolar plate provided with the positive electrode on one surface and the negative electrode on another surface, in which the positive electrode includes a positive current collector configured to be bonded to the one surface of the bipolar plate by an adhesive, the negative electrode includes a negative current collector configured to be bonded to the another surface of the bipolar plate by an adhesive, the bipolar plate has a communication hole communicating the one surface and the another surface, the positive current collector and the negative current collector are electrically joined through the communication hole, and a partition means of partitioning a space is provided in the space between a joint portion between the positive current collector and the negative current collector and an inner surface of the communication hole.

### Advantageous Effects of Invention

According to the present invention, it is possible to provide a bipolar storage battery that prevents an electrolytic solution from reaching a negative electrode side as much as possible to greatly suppress the occurrence of liquid junction even when the electrolytic solution enters communication holes when growth occurs in a positive electrode due to corrosion by sulfuric acid contained in the electrolytic solution, so that the battery performance is less likely to deteriorate.

Specifically, as a partition means, a sealing member is arranged inside the communication hole in a circumferential direction. Therefore, when a positive current collector and a negative current collector are joined inside the communication hole, the sealing member seals between the inner surface of the communication hole and the joint portion of the positive current collector and the negative current collector. That is, even when the electrolytic solution enters the inside of the communication hole, the electrolytic solution can be prevented from reaching the negative electrode side as much as possible, and the occurrence of liquid junction can be greatly suppressed.

Specifically, as a partition means, a protrusion portion is provided inside the communication hole in the circumferential direction. That is, the protrusion portion is provided so as to protrude from the inner surface toward the inside of the communication hole. Therefore, even when the electrolytic solution enters the inside of the communication hole, it can play a role of blocking the electrolytic solution. In addition, even if the electrolytic solution cannot be blocked sufficiently, it is possible to increase the distance for the electrolytic solution to flow to reach the negative electrode side, so that it is possible to prevent the electrolytic solution from reaching the negative electrode side as much as possible to greatly suppress the occurrence of liquid junction.

### Brief Description of Drawings

FIG. 1 is a cross-sectional view illustrating a structure of a bipolar lead-acid storage battery according to an embodiment of the present invention;
FIG. 2 is an enlarged cross-sectional view of a bipolar electrode illustrating a structure of a main part of a bipolar lead-acid storage battery related to a welding step in a first embodiment;
FIG. 3 is an enlarged cross-sectional view of the bipolar electrode illustrating a structure of a main part of the bipolar lead-acid storage battery in a state where welding is completed in the first embodiment;
FIG. 4 is an enlarged cross-sectional view of a bipolar electrode illustrating a structure of a main part of a bipolar lead-acid storage battery in a state where welding is completed in a second embodiment;
FIG. 5 is an enlarged cross-sectional view of a bipolar electrode illustrating a structure of a main part of a bipolar lead-acid storage battery in a state where welding is completed in a third embodiment;
FIG. 6 is an enlarged cross-sectional view of a bipolar electrode illustrating a structure of a main part of a bipolar lead-acid storage battery in a state where welding is completed in a fourth embodiment;
FIG. 7 is an enlarged cross-sectional view of the bipolar electrode illustrating a structure of a main part of the bipolar lead-acid storage battery in a state where welding is completed in the fourth embodiment;
FIG. 8 is an enlarged cross-sectional view of the bipolar electrode illustrating a structure of a main part of the bipolar lead-acid storage battery in a state where welding is completed in the fourth embodiment;
FIG. 9 is an enlarged cross-sectional view of a bipolar electrode illustrating a protrusion portion provided on the basis of a relationship of thicknesses of a positive lead layer and a negative lead layer in a fifth embodiment;
FIG. 10 is an enlarged cross-sectional view of a bipolar electrode illustrating a structure of a main part of a bipolar lead-acid storage battery in a state where welding is completed in a sixth embodiment;
FIG. 11 is an enlarged cross-sectional view of the bipolar electrode illustrating a structure of a main part of the bipolar lead-acid storage battery in a state where welding is completed in the sixth embodiment; and
FIG. 12 is a view illustrating a state in which an electrolytic solution infiltrates an interface between a positive lead layer and an adhesive layer as a result of growth occurring in the positive lead layer due to corrosion by sulfuric acid contained in the electrolytic solution in a conventional bipolar lead-acid storage battery.

### Description of Embodiments

Hereinafter, embodiments of the present invention will be described in detail with reference to the drawings. Note that the embodiments described below illustrate an example of the present invention. In addition, various changes or improvements can be added to the present embodiments, and a mode to which such changes or improvements are added can also be included in the present invention. These embodiments and modifications thereof are included in the scope and gist of the invention, and are included in the scope of the invention described in the claims and its equivalents. Note that, hereinafter, a lead-acid storage battery will be described as an example from among various storage batteries.

### (First Embodiment)

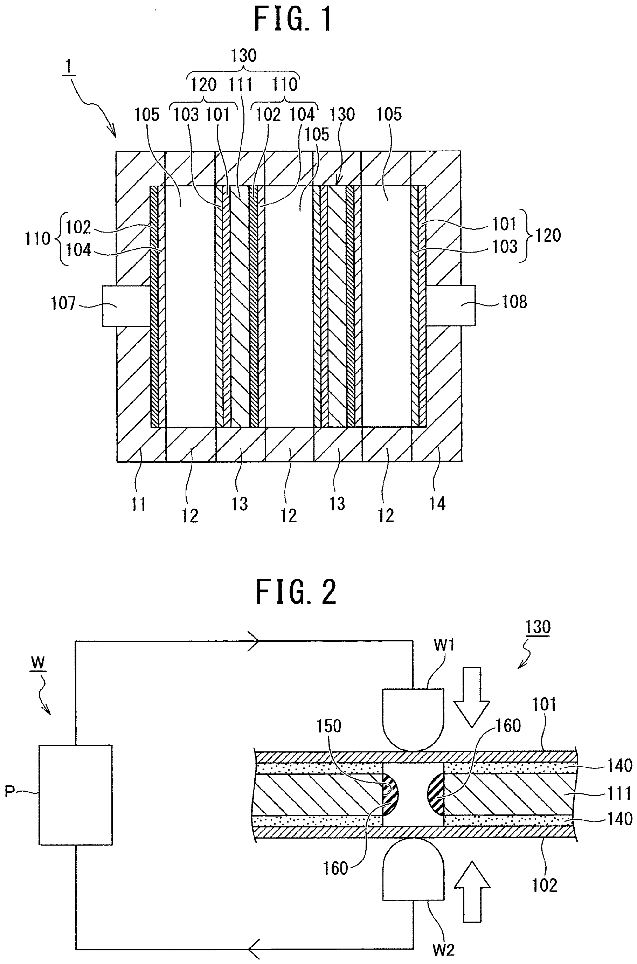

A structure of a bipolar lead-acid storage battery 1 according to embodiments of the present invention will be described with reference to FIG. 1. FIG. 1 is a cross-sectional view describing a structure of the bipolar lead-acid storage battery 1 according to embodiments of the present invention.

The bipolar lead-acid storage battery 1 illustrated in FIG. 1 includes a first plate unit in which a negative electrode 110 is fixed to a first plate (endplate) 11 having a flat plate shape, a second plate unit in which an electrolytic layer 105 is fixed to the inside of a second plate (spacer) 12 having a frame plate shape, a third plate unit in which a bipolar electrode 130 in which a positive electrode 120 is provided on one surface of a substrate (hereinafter, this "substrate" is referred to as a "bipolar plate") 111 and a negative electrode 110 is provided on another surface is fixed to the inside of a third plate (rim) 13 having a frame plate shape, and a fourth plate unit in which the positive electrode 120 is fixed to a fourth plate (endplate) 14 having a flat plate shape.

Then, the second plate unit and the third plate unit are alternately stacked between the first plate unit and the fourth plate unit to form the bipolar lead-acid storage battery 1 having, for example, a substantially rectangular parallelepiped shape. The number of each of the second plate units and the third plate units to be stacked is set such that the storage capacity of the bipolar lead-acid storage battery 1 has a desired numerical value.

A negative terminal 107 is fixed to the first plate 11, and the negative electrode 110 and the negative terminal 107 fixed to the first plate 11 are electrically connected. A positive terminal 108 is fixed to the fourth plate 14, and the positive electrode 120 and the positive terminal 108 fixed to the fourth plate 14 are electrically connected.

The first plate 11 to the fourth plate 14 are formed of, for example, a well-known molded resin. Then, the first plate 11 to the fourth plate 14 are fixed to each other by an appropriate method so that the inside is in a sealed state and the electrolytic solution does not flow out.

The electrolytic layer 105 is made of, for example, a glass fiber mat impregnated with an electrolytic solution containing sulfuric acid.

The bipolar plate 111 is made of, for example, thermoplastic resin. Examples of the thermoplastic resin forming the bipolar plate 111 include acrylonitrile-butadiene-styrene copolymer (ABS resin) and polypropylene. These thermoplastic resins are excellent in moldability and also excellent in sulfuric acid resistance. Hence, even when the electrolytic solution comes into contact with the bipolar plate 111, decomposition, deterioration, corrosion, and the like hardly occur in the bipolar plate 111.

The bipolar plate 111 is provided with a communication hole 150 that allows the one surface and the another surface to communicate with each other (see FIG. 2 to be described below). Then, a positive lead layer 101 and a negative lead layer 102 are joined via the inside of the communication hole 150, so that they are electrically connected to each other, and conduction between the positive electrode and the negative electrode is achieved.

The positive electrode 120 includes the positive lead layer 101, which is a positive current collector made of lead or a lead alloy and arranged on the one surface of the bipolar plate 111, and a positive active material layer 103 arranged on the positive lead layer 101. This positive lead layer 101 is bonded to the one surface of the bipolar plate 111 by an adhesive layer 140 such as an adhesive provided between the one surface of the bipolar plate 111 and the positive lead layer 101. Accordingly, the adhesive layer 140, the positive lead layer 101, and the positive active material layer 103 are stacked in this order on the one surface (in the drawings such as FIG. 2 to be described below, a surface facing upward on the plane of paper) of the bipolar plate 111.

The negative electrode 110 includes the negative lead layer 102, which is a negative current collector made of lead or a lead alloy and arranged on the another surface of the bipolar plate 111 (in the drawings such as FIG. 2, a surface facing downward on the plane of paper), and a negative active material layer 104 arranged on the negative lead layer 102. This negative lead layer 102 is bonded to the another surface of the bipolar plate 111 by an adhesive layer 140 such as an adhesive provided between the another surface of the bipolar plate 111 and the negative lead layer 102. Then, these positive electrode 120 and negative electrode 110 are electrically connected through the communication hole 150 described above.

Note that, in the cross-sectional view of the bipolar electrode 130 as illustrated, for example, in FIG. 2 illustrated below, among the elements constituting the positive electrode 120, only the positive lead layer 101 is illustrated, and the positive active material layer 103 is omitted. In addition, similarly, among the elements constituting the negative electrode 110, only the negative lead layer 102 is illustrated, and the negative active material layer 104 is omitted.

In the bipolar lead-acid storage battery 1 of the first embodiment having such a configuration, as described above, the bipolar plate 111, the positive lead layer 101, the positive active material layer 103, the negative lead layer 102, and the negative active material layer 104 constitute the bipolar electrode 130. The bipolar electrode is an electrode having both positive and negative electrode functions in one electrode. Then, the bipolar lead-acid storage battery 1 of the embodiment of the present invention has a battery configuration in which a plurality of cell members formed by interposing the electrolytic layer 105 between the positive electrode 120 and the negative electrode 110 is alternately stacked and assembled to connect the cell members in series.

Next, a step of bonding the positive lead layer and the negative lead layer in the communication hole provided in the bipolar plate will be described below. FIG. 2 is an enlarged cross-sectional view of the bipolar electrode 130 illustrating a structure of a main part of the bipolar lead-acid storage battery 1 related to a welding step in the first embodiment. Further, FIG. 2 illustrates a part of a welding machine necessary for welding.

As illustrated in FIG. 2, in the bipolar electrode 130, an adhesive is applied to the one surface of the bipolar plate 111, the positive lead layer 101 is arranged thereon, and the adhesive layer 140 and the positive lead layer 101 are bonded to each other. In addition, an adhesive is applied to the another surface of the bipolar plate 111, the negative lead layer 102 is arranged thereon, and the adhesive layer 140 and the negative lead layer 102 are bonded to each other. Note that, as described above, illustration of the positive active material layer 103 and the negative active material layer 104 is omitted.

In the first embodiment, the adhesive layers 140 are provided so as to entirely cover the one surface and the another surface of the bipolar plate 111. However, as described above, the adhesive layers 140 are provided on the one surface and the another surface of the bipolar plate 111, and are not located inside the communication hole 150.

At this stage, the positive lead layer 101 and the negative lead layer 102 bonded to the bipolar plate 111 do not enter the inside of the communication hole 150, but cover the communication hole 150. Then, in this state, the positive lead layer 101 and the negative lead layer 102 are joined in the communication hole 150.

A welding machine W is used for joining the positive lead layer 101 and the negative lead layer 102. In the embodiment of the present invention, resistance welding is performed using the welding machine W illustrated in FIG. 2. The welding machine W includes a power supply P and two electrodes W1 and W2 connected to the power supply P. Current applied from the power supply P to the electrode W1 and the electrode W2 flows from the power supply P to the electrode W1 and from the electrode W2 to the power supply P.

At the time of welding, the electrode W1 is in contact with the positive lead layer 101, and the electrode W2 is in contact with the negative lead layer 102. Then, the electrodes move toward the communication hole 150 in directions indicated by the arrows in FIG. 2 while applying pressure so as to approach each other. As described above, since the electrodes are in contact with the lead layers, the positive lead layer 101 and the negative lead layer 102 are also deformed to be curved as a result of the movement of the electrodes, and come into contact with each other in the communication hole 150. At this time, the current flows in the direction of the arrow indicated in the welding machine W, and they are fused and joined to each other.

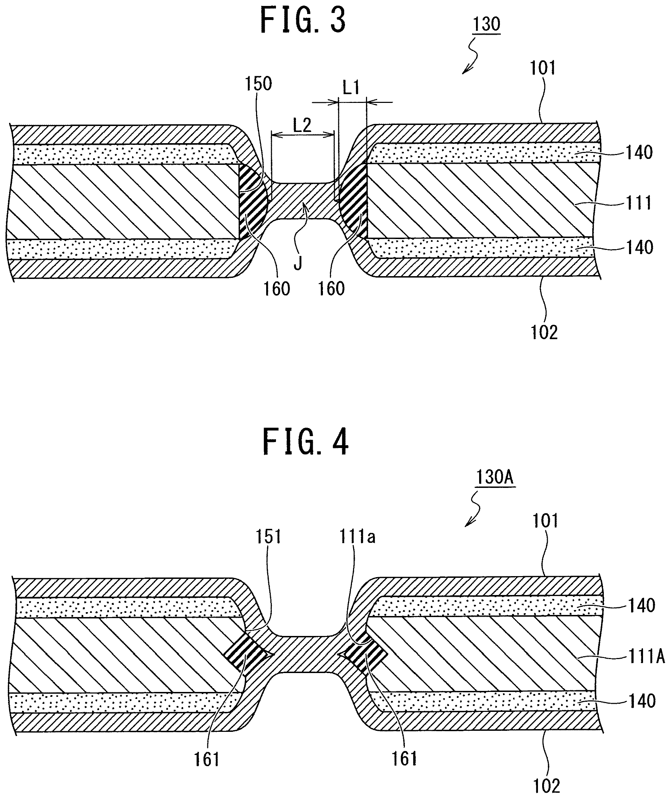

Such a state is illustrated in FIG. 3. FIG. 3 is an enlarged cross-sectional view of the bipolar electrode 130 illustrating a structure of a main part of the bipolar lead-acid storage battery 1 in a state where welding is completed in the first embodiment. Note that, in FIG. 3, the drawing of the welding machine W is omitted.

Portions of the positive lead layer 101 and the negative lead layer 102 that are pressed in contact with the electrode W1 and the electrode W2 approach and contact each other in the communication hole 150. Then, when the current is applied by the welding machine W, they are joined to each other in the communication hole 150.

Here, in the bipolar lead-acid storage battery 1 of the embodiment of the present invention, a partition means of partitioning a space is provided in the space between the joint portion between the positive lead layer 101 and the negative lead layer 102 and the inner surface of the communication hole 150.

Specifically, as illustrated in FIGS. 2 and 3, a sealing member 160, which is a partition means, is arranged inside the communication hole 150 in the circumferential direction. Even when the electrolytic solution enters the inside of the communication hole 150 for some reason, the sealing member 160 prevents entry of the electrolytic solution. This sealing member 160 is arranged inside the communication hole 150 to partition and seal a joint portion J between the positive lead layer 101 and the negative lead layer 102 and a surface (hereinafter, such a surface is appropriately referred to as an "inner surface of the communication hole 150") constituting the communication hole 150 to prevent the electrolytic solution from reaching the negative electrode side as much as possible and greatly suppress the occurrence of liquid junction.

Therefore, the sealing member 160 is required to have resistance to sulfuric acid contained in the electrolytic solution that has entered the inside of the communication hole 150. As the sealing member 160, for example, one formed of a material such as fluorine resin, fluorine rubber, or an ethylene propylene rubber having sulfuric acid resistance is suitably used.

In addition, as the sealing member 160, an O-ring, a square packing, a half-round packing, a mountain-shaped packing, a V packing, a U packing, a Y packing, or the like is used. FIGS. 2 and 3 illustrate an example in which, among them, the mountain-shaped packing is arranged inside the communication hole 150. However, which type to use as the sealing member 160 can be appropriately selected.

Further, a thickness of the sealing member 160 is equal to or less than a thickness of the bipolar plate 111, that is, a distance between the one surface and the another surface of the bipolar plate 111. Accordingly, the sealing member 160 is not arranged to protrude beyond the communication hole 150. However, for example, the sealing member 160 is not refused to slightly elongate to protrude from the one surface, the another surface, or both surfaces of the bipolar plate 111. In such a state, it is also possible to prevent the adhesive of the adhesive layer 140 from entering the inside of the communication hole 150.

On the other hand, as illustrated in FIG. 2, when a length from the inner surface of the communication hole 150 to the most protruding portion of the sealing member 160 is L1, the length L1 is set to a length that can secure a distance L2 for unfailingly joining the positive lead layer 101 and the negative lead layer 102 inside the communication hole 150.

As described above, the sealing member 160 is arranged inside the communication hole 150 in the circumferential direction. Accordingly, as the shape of the sealing member 160 in the circumferential direction, a shape conforming to the shape of the communication hole 150 is adopted.

Then, when the communication hole 150 has a circular shape, the sealing member 160 has a diameter that is 102% or more and 110% or less of the diameter of the communication hole 150. Since the sealing member 160 has such a size, it is possible to reduce the possibility of generating a gap with respect to the inside of the communication hole 150.

As described above, in the first embodiment of the present invention, the sealing member 160 is arranged inside the communication hole 150 in the circumferential direction. Therefore, by joining the positive lead layer 101 and the negative lead layer 102 inside the communication hole 150, the sealing member 160 seals between the inner surface of the communication hole 150 and the joint portion J between the positive lead layer 101 and the negative lead layer 102. Therefore, even when the electrolytic solution enters the inside of the communication hole 150, the electrolytic solution can be prevented from reaching the negative electrode side as much as possible, and the occurrence of liquid junction can be greatly suppressed.

In addition, by arranging the sealing member 160 inside the communication hole 150, the sealing member 160 is in a state of protruding from the inner surface of the communication hole 150. That is, since the sealing member 160 forms a sort of protrusion portion inside the communication hole 150, even when the electrolytic solution enters the communication hole 150, the role of blocking the electrolytic solution can be expected. In addition, even when the electrolytic solution cannot be blocked, the flow distance of the electrolytic solution is increased by the amount of flowing along the sealing member 160. Therefore, even when the electrolytic solution enters the inside of the communication hole 150, the electrolytic solution can be delayed to reach the negative electrode side as much as possible, and the occurrence of liquid junction can be greatly suppressed.

Note that the restrictions regarding the shape and size of the sealing member 160 described so far are also applied to sealing members 160 adopted in each embodiment described below.

### (Second Embodiment)

Next, the second embodiment of the present invention will be described. Note that, in the second embodiment, the same constituent elements as those described in the above-described first embodiment are denoted by the same reference numerals, and redundant description of the same constituent elements will be omitted.

FIG. 4 is an enlarged cross-sectional view of a bipolar electrode 130A illustrating a structure of a main part of a bipolar lead-acid storage battery 1 in a state where welding is completed in the second embodiment. The use of the welding machine W and performing the resistance welding in the welding step in the second embodiment are similar as in the case of the first embodiment.

The second embodiment is different from the first embodiment in that the shape of the bipolar plate 111 constituting the inside of the communication hole 150 is different. That is, as illustrated in FIG. 4, in a bipolar plate 111A of the bipolar electrode 130A, the inner surface of a communication hole 151 is provided with a recessed portion 111a to which a sealing member 161, which is a partition means, is fitted in a circumferential direction.

In the bipolar electrode 130 of the first embodiment described above, the inner surface of the communication hole 150 of the bipolar plate 111 is not particularly provided with a recessed portion or the like, and is only communicated. On the other hand, in the bipolar electrode 130A of the second embodiment, the recessed portion 111a to which the sealing member 161 can be fitted in the circumferential direction is formed on the inner surface of the communication hole 151.

That is, by forming the recessed portion 111a on the inner surface of the communication hole 151 in the circumferential direction, the sealing member 161 is fitted into the recessed portion 111a. By fitting the sealing member 161 into the recessed portion 111a, the sealing member 161 is brought into closer contact with the bipolar plate 111A.

That is, the shape of the recessed portion 111a and the shape of the sealing member 161 to be fitted are formed to match each other. Accordingly, the shape of the recessed portion 111a to be formed depends on the shape of the sealing member 161 to be fitted. This is because if the state in which the fitted sealing member 161 is in close contact with the recessed portion 111a cannot be maintained, the sealing member 161 may move inside the communication hole 151, and the electrolytic solution may reach the negative electrode side through the recessed portion 111a.

However, the sealing member 161 is not entirely fitted into the recessed portion 111a, but only a part thereof is fitted into the recessed portion 111a. That is, the sealing member 161 is not embedded in the recessed portion 111a, and a portion of the sealing member 161 not fitted into the recessed portion 111a is in a state of protruding from the inner surface of the communication hole 151.

In the bipolar electrode 130A illustrated in FIG. 4, as an example, the recessed portion 111a is formed in a square shape, and a square packing is fitted thereto. Therefore, when viewed in cross-section, two sides sandwiching one corner portion of the square packing are in contact with two sides formed as the recessed portion 111a, and a corner portion at a position opposite the corner portion protrudes from the inner surface of the communication hole 151.

By forming the recessed portion 111a into which the sealing member 161 is fitted in the bipolar plate 111 in this manner, the bipolar plate 111 and the sealing member 161 can be arranged in close contact with each other. Thus, since the sealing member 161 seals between the inner surface of the communication hole 150 and the joint portion when the positive lead layer 101 and the negative lead layer 102 are joined, even if the electrolytic solution enters the inside of the communication hole 151, it is possible to more unfailingly prevent the electrolytic solution from reaching the negative electrode side.

In addition, since a part of the sealing member 161 is arranged at a position protruding from the inner surface of the communication hole 151, even if the electrolytic solution enters the communication hole 151, the flow distance of the electrolytic solution is increased by the amount of the protruding portion of the sealing member 161. Therefore, even when the electrolytic solution enters the inside of the communication hole 151, the electrolytic solution can be delayed to reach the negative electrode side as much as possible, and the occurrence of liquid junction can be greatly suppressed.

Note that, as described above, in the bipolar electrode 130A illustrated in FIG. 4, one corner portion of the square packing of the sealing member 161 is fitted into the recessed portion 111a, and the corner portion at a position opposite the corner portion protrudes from the inner surface of the communication hole 151. In this state, a line orthogonal to the middle of a line connecting these corner portions is flush with the inner surface of the communication hole 151.

However, the arrangement of the sealing member 161 at such a position is merely an example, and the aforementioned orthogonal line may not be flush with the inner surface of the communication hole 151. That is, when the recessed portion 111a is formed larger and deeper, the aforementioned orthogonal line moves into the recessed portion 111a, and the position of the corner portion protruding from the inner surface becomes closer to the inner surface.

By forming the recessed portion 111a in such a shape and by selecting the sealing member 161 to be fitted, a distance L2 of a joint portion J between the positive lead layer 101 and the negative lead layer 102 can be increased. In addition, as described above, since the flow distance of the electrolytic solution that has entered the inside of the communication hole 151 can be increased, the electrolytic solution can be delayed to reach the negative electrode side as much as possible, and the occurrence of liquid junction can be greatly suppressed.

On the other hand, when the recessed portion 111a is formed smaller and shallower, the aforementioned orthogonal line is positioned outside the inner surface of the communication hole 151, and the position of the corner portion protruding from the inner surface becomes farther from the inner surface. By forming the recessed portion 111a in such a shape and by selecting the sealing member 161, the two corner portions on the aforementioned orthogonal line can be arranged at positions separated from the inner surface.

Thus, even if the electrolytic solution enters the inside of the communication hole 151, since not only the flow distance of the electrolytic solution that has entered the inside of the communication hole 151 can be increased, but also the electrolytic solution has to further climb over the corner portion of the sealing member 161 after flowing along the inner surface, and the electrolytic solution can be further prevented from flowing to the negative electrode side.

### (Third Embodiment)

Next, the third embodiment of the present invention will be described. Note that, in the third embodiment, the same constituent elements as those described in the above-described first or second embodiment are denoted by the same reference numerals, and redundant description of the same constituent elements will be omitted.

FIG. 5 is an enlarged cross-sectional view of a bipolar electrode 130B illustrating a structure of a main part of a bipolar lead-acid storage battery 1 in a state where welding is completed in the third embodiment. The use of the welding machine W and performing the resistance welding in the welding step in the third embodiment are similar as in the case of the first embodiment.

The difference between the bipolar electrode 130B of the third embodiment and the bipolar electrode 130 of the first embodiment or the bipolar electrode 130A of the second embodiment is that the shape of a bipolar plate 111B inside a communication hole 150 is different.

That is, in the bipolar electrode 130B of the third embodiment, the shape of the bipolar plate 111B inside a communication hole 152 is formed to protrude toward the inside of the communication hole 152.

In the bipolar electrode 130B illustrated in FIG. 5, the bipolar plate 111B is formed to have a protrusion shape toward the inside of the communication hole 152 so as to have a tapered shape from both a positive electrode 120 side and a negative electrode 110 side. Then, a sealing member 162, which is a partition means, is arranged to cover the portion (protrusion portion) formed in a protrusion shape. Therefore, in the bipolar electrode 130B, for example, a V packing is adopted as the sealing member 162.

However, depending on the shape of the protrusion portion formed on the bipolar plate 111B, for example, a U packing, a Y packing, or the like can also be used. In addition, the size of the protrusion portion formed on the bipolar plate 111B can be set in consideration of the relationship with a joint portion J between a positive lead layer 101 and a negative lead layer 102.

As described above, by forming the shape of the bipolar plate 111B inside the communication hole 152 into a protrusion shape and arranging the sealing member 162 to cover the bipolar plate 111B from above, the sealing member 162 seals between the inner surface of the communication hole 150 and the joint portion when the positive lead layer 101 and the negative lead layer 102 are joined, and even if the electrolytic solution enters the inside of the communication hole 150, it is possible to more unfailingly prevent the electrolytic solution from reaching the negative electrode side.

In addition, by forming the shape of the bipolar plate 111B so as to protrude from the inner surface of the communication hole 152, even if the electrolytic solution enters the communication hole 152, the sealing member 162 is further arranged to cover the protruding portion of the bipolar plate 111, so that the flow distance of the electrolytic solution is increased by this amount. Therefore, even when the electrolytic solution enters the inside of the communication hole 152, the electrolytic solution can be delayed to reach the negative electrode side as much as possible, and the occurrence of liquid junction can be greatly suppressed.

Note that it has been described as an example that nothing is placed inside the communication hole 150, and the positive lead layer 101 and the negative lead layer 102 are directly joined in the communication hole 150. However, such a joining method is not limited to such a case, and for example, it is also conceivable to insert a conductor into the communication hole 150.

In this case, the sealing member 160 is sandwiched and interposed between the conductor, that is, the joint portion, and the inner surface of the communication hole 150. Then, the positive lead layer 101 and the negative lead layer 102 are joined to the conductor, and the positive electrode and the negative electrode are electrically connected.

Even when the conductor is inserted into the inside of the communication hole 150 as described above, since the sealing member 160 seals between the inner surface of the communication hole 150 and the conductor (joint portion) when the positive lead layer 101 and the negative lead layer 102 and the conductor are joined, even if the electrolytic solution enters the inside of the communication hole 150, it is possible to more unfailingly prevent the electrolytic solution from reaching the negative electrode side.

In addition, since the sealing member 160 closes between the conductor and the inner surface of the communication hole 150, even if the electrolytic solution enters the inside of the communication hole 150, the electrolytic solution can be prevented by the sealing member 160 from flowing to the negative electrode side, and the occurrence of liquid junction can be greatly suppressed.

### (Fourth Embodiment)

Next, the fourth embodiment of the present invention will be described. Note that, in the fourth embodiment, the same constituent elements as those described in the above-described first to third embodiments are denoted by the same reference numerals, and redundant description of the same constituent elements will be omitted.

FIG. 6 is an enlarged cross-sectional view of a bipolar electrode illustrating a structure of a main part of a bipolar lead-acid storage battery 130C in a state where welding is completed in the fourth embodiment. FIG. 6 illustrates a structure of a protrusion portion 170 provided on the inner surface of a communication hole 150 in the fourth embodiment.

As illustrated in FIG. 6, the protrusion portion 170, which is a partition means, is provided on the inner surface of the communication hole 150 in the circumferential direction. Note that, as will be described below, the arrangement position and shape of the protrusion portions 170 may be different, but in a case where these are collectively described, they are appropriately referred to as the "protrusion portion 170".

That is, the protrusion portion 170 is formed so as to protrude from the inner surface of the communication hole 150 toward the inside of the communication hole 150. In addition, since the protrusion portion 170 is formed in this manner, the protrusion portion 170 is formed of the same material as the bipolar plate 111 described above.

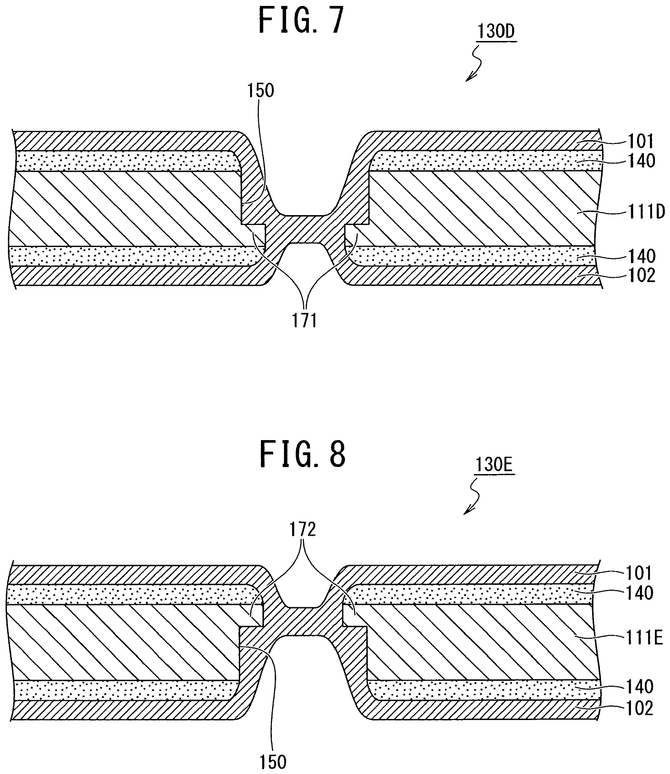

In addition, as illustrated in FIG. 6, the shape of the protrusion portion 170 is formed to be a rectangular shape in a cross-sectional view. Note that protrusion portions 171 and 172 illustrated in FIGS. 7 and 8 to be described below also have a rectangular shape.

In FIG. 6, the protrusion portion 170 is provided so as to be located at a central portion in a thickness direction (up-down direction in the drawing) of a bipolar plate 111C. That is, the protrusion portion 170 is provided at a position where a distance from one surface of the bipolar plate 111C to the center of the protrusion portion 170 is substantially equal to a distance from the center of the protrusion portion 170 to another surface.

However, the position inside the communication hole 150 at which the protrusion portion 170 is provided is not particularly limited. Here, FIGS. 7 and 8 are enlarged cross-sectional views of bipolar electrodes 130D and 130E illustrating a structure of a main part of a bipolar lead-acid storage battery 1 in a state where welding is completed in the fourth embodiment.

In the bipolar electrode 130D illustrated in FIG. 7, a protrusion portion 171 is provided closer to a negative lead layer 102 side on the inner surface of the communication hole 150. In this case, when resistance welding is performed, a positive lead layer 101 is joined to the negative lead layer 102 in a state of being further moved to the inside of the communication hole 150.

On the other hand, in the bipolar electrode 130E illustrated in FIG. 8, a protrusion portion 172 is provided closer to the positive lead layer 101 side on the inner surface of the communication hole 150. In this case, when resistance welding is performed, contrary to the case illustrated in FIG. 7, the negative lead layer 102 is joined to the positive lead layer 101 in a state of being further moved to the inside of the communication hole 150.

As described above, in the fourth embodiment of the present invention, as illustrated in FIGS. 6 to 8, the protrusion portion 170 to the protrusion portion 172 are provided on the inner surface of the communication hole 150 in the circumferential direction. By providing these protrusion portions 170 on the inner surface of the communication hole 150 in this manner, the protrusion portion 170 is in a state of protruding from the inner surface of the communication hole 150. Therefore, it can play a role of blocking the electrolytic solution even when the electrolytic solution enters the inside of the communication hole 150.

In addition, even if the electrolytic solution cannot be sufficiently blocked, the flow distance of the electrolytic solution is increased by the amount of flowing along the protrusion portion 170. Therefore, even when the electrolytic solution enters the inside of the communication hole 150, the electrolytic solution can be delayed to reach the negative electrode side as much as possible, and the occurrence of liquid junction can be greatly suppressed.

### (Fifth Embodiment)

Next, the fifth embodiment of the present invention will be described. Note that, in the fifth embodiment, the same constituent elements as those described in the above-described first to fourth embodiments are denoted by the same reference numerals, and redundant description of the same constituent elements will be omitted.

The fifth embodiment is different from the fourth embodiment in that the arrangement position of a protrusion portion 173, which is a partition means, provided on the inner surface of the communication hole 150, is determined according to the relationship of the thicknesses of a positive lead layer 101A and a negative lead layer 102A.

Note that, in addition, the use of the welding machine W and performing the resistance welding in the welding step in the fifth embodiment are similar as in the case of the first embodiment or the like. In addition, the shape of the protrusion portion 173 is also formed in a rectangular shape in a cross-sectional view, similarly to the protrusion portion 170 to the protrusion portion 172 described in the fourth embodiment.

For example, the positive lead layer 101A and the negative lead layer 102A may have different thicknesses. As described above, when the positive lead layer 101A and the negative lead layer 102A have different thicknesses, the arrangement position of the protrusion portion is arranged at a position closer to the lead layer having a thinner thickness.

That is, it is arranged at a position where a distance from a surface of a bipolar plate provided with another-side lead layer having a small thickness to the center of the protrusion portion is shorter than a distance from a surface of the bipolar plate provided with a one-side lead layer having a large thickness to the center of the protrusion portion.

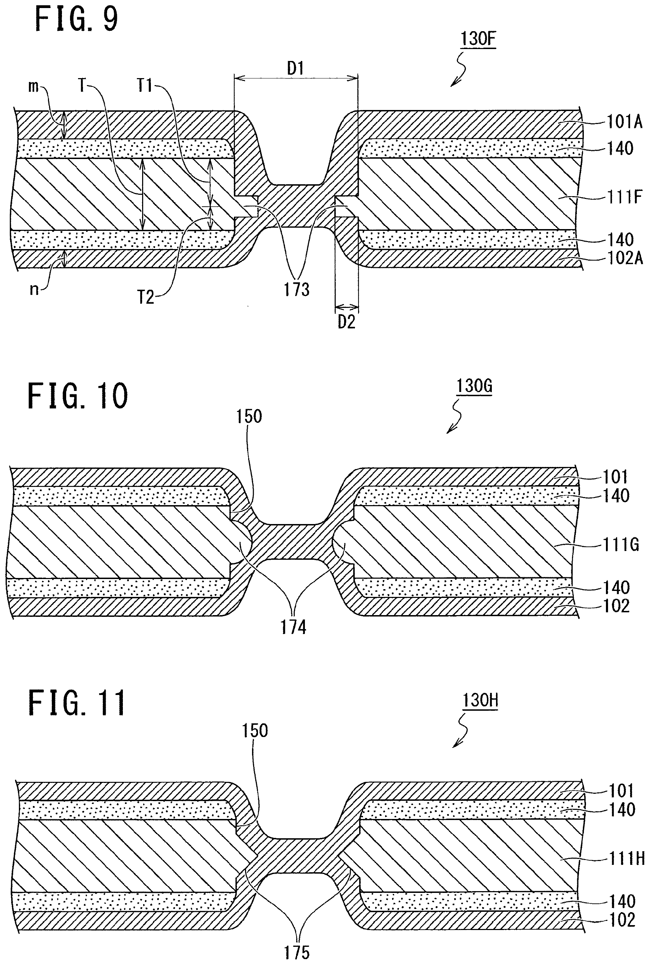

This will be described below with reference to FIG. 9. FIG. 9 is an enlarged cross-sectional view of a bipolar electrode 130F illustrating the protrusion portion 173 provided on the basis of a relationship of thicknesses of a positive lead layer and a negative lead layer in the fifth embodiment.

In the bipolar electrode 130F illustrated in FIG. 9, a thickness (n) of the negative lead layer 102A is formed to be thinner than a thickness (m) of the positive lead layer 101A. Therefore, the arrangement position of the protrusion portion 173 is closer to the negative lead layer 102A side rather than the positive lead layer 101A side.

As described above, in the fifth embodiment, the arrangement position of the protrusion portion 173 is determined according to the thickness of each lead layer, but it is also possible to determine more specifically in association with the thickness of each lead layer as to how close and to which lead layer the protrusion portion 173 is to be arranged, that is, at which position inside the through-hole 150 the protrusion portion 173 is to be arranged.

Specifically, in the bipolar electrode 130F illustrated in FIG. 9, the thickness (m) of the positive lead layer 101A and the thickness (n) of the negative lead layer 102A are formed such that the positive lead layer 101A is thicker than the negative lead layer 102A, for example, at a ratio of m : n = 2 : 1. When the bipolar electrode 130F is configured as described above, the arrangement position of the protrusion portion 173 is determined in relation to the thicknesses of both of them.

That is, the protrusion portion 173 is arranged at a position where the ratio of the thicknesses of the positive lead layer 101A and the negative lead layer 102A is equal to the ratio of a distance from one surface of a bipolar plate 111F to the center of the protrusion portion 173 and a distance from the center of the protrusion portion 173 to another surface.

That is, as illustrated in FIG. 9, the bipolar plate 111F is formed to have a thickness T. In addition, a distance obtained by adding a distance T1 from the one surface of the bipolar plate 111F to the center of the protrusion portion 173 and a distance T2 from the center of the protrusion portion 173 to the another surface is equal to the thickness T of the aforementioned bipolar plate 111F. That is, there is a relationship of T = T1 + T2.

Then, the ratio between the distance T1 and the distance T2 is equal to the ratio of the thicknesses of the positive lead layer 101A and the negative lead layer 102A. That is, a relationship of T1 : T2 = m : n is established.

In addition, the protrusion amount of the protrusion portion 173 from the inner surface of the communication hole 150 is preferably defined in relation to the diameter of the communication hole 150. Specifically, when the diameter of the communication hole 150 is D1 and the protrusion amount of the protrusion portion 173 from the inner surface of the communication hole 150 is D2, the ratio of D1 : D2 is preferably determined in a range of 5 : 1 to 4 : 1. In particular, it is more preferable that the protrusion amount of the protrusion portion 173 is determined so as to satisfy a condition of D1 : D2 = 5 : 1.

By adopting the above configuration, the same effect as that of the above-described fourth embodiment, that is, the effect that the electrolytic solution that has entered the communication hole 150 is blocked by the protrusion portion 173 and further the flow distance of the electrolytic solution can be increased by the amount of flowing along the protrusion portion 173, so that the electrolytic solution can be delayed to reach the negative electrode side as much as possible and the occurrence of liquid junction can be largely suppressed is provided.

In addition, in the fifth embodiment, the arrangement position and the protrusion amount of the protrusion portion 173 are determined as described above. That is, for example, even when resistance welding is performed in a case where the thickness of the positive lead layer 101A is thicker than the thickness of the negative lead layer 102A, the positive lead layer 101A, which is a thicker lead layer, is joined to the negative lead layer 102A in a state where the positive lead layer 101A deeply enters the inside of the communication hole 150. Accordingly, since the elongation of lead in the positive lead layer 101A and the negative lead layer 102A can be made uniform in resistance welding, it is particularly possible to prevent occurrence of joining failure such as breakage of the negative lead layer 102A. Then, by preventing the joining failure, resistance welding is more appropriately performed, the electrolytic solution is prevented from entering the negative electrode side through the communication hole 150, and the occurrence of liquid junction can be greatly suppressed.

Further, by determining the protrusion amount of the protrusion portion 173 in relation to the diameter of the communication hole 150, it is particularly possible to prevent the protrusion amount from increasing or decreasing. Thus, the electrolytic solution can be prevented from entering the negative electrode side through the communication hole 150, the occurrence of liquid junction can be greatly suppressed, and the positive lead layer 101A and the negative lead layer 102A can be appropriately joined.

### (Sixth Embodiment)

Next, the sixth embodiment of the present invention will be described. Note that, in the sixth embodiment, the same constituent elements as those described in the above-described first to fifth embodiments are denoted by the same reference numerals, and redundant description of the same constituent elements will be omitted.

In the fourth or fifth embodiment, the example in which the shape of the protrusion portion 170 is formed in a rectangular shape in a cross-sectional view has been described. On the other hand, in the sixth embodiment, two examples different from the above-described shape will be described as the shape of the protrusion portion 170, which is a partition means.

FIG. 10 is an enlarged cross-sectional view of a bipolar electrode 130G illustrating a structure of a main part of a bipolar lead-acid storage battery 1 in a state where welding is completed in the sixth embodiment. In addition, FIG. 11 is an enlarged cross-sectional view of a bipolar electrode 130H illustrating a structure of a main part of a bipolar lead-acid storage battery 1 in a state where welding is completed in the sixth embodiment.

First, a protrusion portion 174 illustrated in FIG. 10 is formed so as to protrude in a circular shape in cross-sectional view toward the inside of a communication hole 150 formed in a bipolar plate 111G. In addition, in FIG. 10, the protrusion portion 174 is formed to have a substantially semicircular shape. However, the shape may not be a substantially semicircular shape, and it is sufficient if the shape has a curved surface such as a substantially semi-elliptical shape.

Further, although the protrusion portion 174 illustrated in FIG. 10 is formed in a substantially central portion of the communication hole 150, it may be provided so as to be close to one surface or another surface of the bipolar plate 111G like the protrusion portions 171 and 172 described with reference to FIG. 7 or 8 in the fourth embodiment.

In addition, the inner surface of the communication hole 150 in FIG. 10 is once formed in a substantially vertical direction from the one surface of the bipolar plate 111G, and after the protrusion portion 174 is formed, is formed again in the substantially vertical direction to be connected to the another surface. That is, the protrusion portion 174 is provided on a part of the inner surface of the communication hole 150.

However, the protrusion portion 174 may not be provided in this manner. That is, the protrusion portion 174 may be provided on the entire inner surface of the communication hole 150. Specifically, one end of the protrusion portion 174 is arranged at a position connected to the one surface of the bipolar plate 111G, and the other end of the protrusion portion 174 is arranged at a position connected to the another surface. Accordingly, when the protrusion portion 174 is formed in a semicircular shape, a distance from the one surface to the another surface of the bipolar plate 111G on the inner surface of the communication hole 150 is equal to the diameter of the protrusion portion 174.

Next, a protrusion portion 175 illustrated in FIG. 11 is formed so as to protrude in a triangular shape in cross-sectional view toward the inside of a communication hole 150 formed in a bipolar plate 111H. In addition, in FIG. 11, the protrusion portion 175 is formed such that the internal angle at a corner portion having a protrusion shape is approximately 90 degrees, but the angle of the internal angle can be arbitrarily set. In addition, the corner portion can be formed to have a rounded shape by rounding off the corner.

Further, although the protrusion portion 175 illustrated in FIG. 11 is formed in a substantially central portion of the communication hole 150, it may be provided so as to be close to one surface or another surface of the bipolar plate 111H like the protrusion portions 171 and 172 described with reference to FIG. 7 or 8 in the fourth embodiment.

In addition, the inner surface of the communication hole 150 in FIG. 11 is once formed in a substantially vertical direction from the one surface of the bipolar plate 111H, and after the protrusion portion 175 is formed, is formed again in the substantially vertical direction to be connected to the another surface. That is, the protrusion portion 175 is provided on a part of the inner surface of the communication hole 150.

However, the protrusion portion 175 may not be provided in this manner. That is, the protrusion portion 175 may be provided on the entire inner surface of the communication hole 150. Specifically, among the three points constituting the triangle, two points other than one point protruding to the inner surface of the communication hole 150 are arranged at a position connected to the one surface of the bipolar plate 111H and a position connected to another surface. Therefore, a distance from the one surface to the another surface of the bipolar plate 111H on the inner surface of the communication hole 150 is equal to a length of one side connecting the two points of the protrusion portion 175 constituting the triangular shape and arranged on the one surface and the another surface of the bipolar plate 111H.

In addition, both the protrusion portion 174 illustrated in FIG. 10 and the protrusion portion 175 illustrated in FIG. 11 may be arranged at positions based on the ratio of the thicknesses of the positive lead layer 101A and the negative lead layer 102A described in the above-described fifth embodiment. Further, the protrusion amount from the inner surface of the communication hole 150 may be defined in relation to the diameter of the communication hole 150.

By adopting the above configuration, the same effect as that of the above-described fourth embodiment, that is, the effect that the electrolytic solution that has entered the communication hole 150 is blocked by the protrusion portions 174 and 175 or the flow distance of the electrolytic solution can be increased by the amount of flowing along the protrusion portions 174 and 175, so that the electrolytic solution can be delayed to reach the negative electrode side as much as possible and the occurrence of liquid junction can be largely suppressed is provided.

In addition, by forming the protrusion portions 174 and 175 having the shape as described above on the basis of the ratio of the thicknesses of the positive lead layer 101A and the negative lead layer 102A, the elongation of lead in the positive lead layer 101A and the negative lead layer 102A can be made uniform in resistance welding, so that it is possible to prevent the occurrence of joining failure such as breakage of the negative lead layer 102A.

Further, by defining the protrusion amount from the inner surface of the communication hole 150 in relation to the diameter of the communication hole 150, the electrolytic solution can be prevented from entering the negative electrode side through the communication hole 150, the occurrence of liquid junction can be greatly suppressed, and the positive lead layer 101A and the negative lead layer 102A can be appropriately joined.

Note that it has been described as an example that nothing is placed inside the communication hole 150, and the positive lead layer 101 and the negative lead layer 102 are directly joined in the communication hole 150. However, such a joining method is not limited to such a case, and for example, it is also conceivable to insert a conductor into the communication hole 150. In this case, the positive lead layer 101 and the negative lead layer 102 are joined to the conductor, and the positive electrode and the negative electrode are electrically connected.

When the conductor is inserted into the inside of the communication hole 150 in this manner, the inside of the communication hole 150 can be closed by the protrusion portion 170 and the conductor facing each other, in particular, by placing the conductor on the portion of the protrusion portion 170 and joining the positive lead layer 101 and the negative lead layer 102 so as to sandwich the conductor. Accordingly, even if the electrolytic solution enters the inside of the communication hole 150, the electrolytic solution can be more unfailingly prevented from reaching the negative electrode side.

In addition, since the conductor is fitted so as to be in contact with the inner surface of the communication hole 150, it is possible to more unfailingly prevent the electrolytic solution from entering the inside of the communication hole 150, and thus the occurrence of liquid junction can be greatly suppressed.

Further, the case where the communication hole 150 has a circular shape has been described as an example, but the shape of the communication hole 150 is not limited to a circular shape, but may be any shape such as a quadrangular shape or a triangular shape. Then, the protrusion portion 170 is formed so as to protrude from the inner surface of the communication hole 150 toward the inside of the communication hole 150 according to the shape of the communication hole 150. In addition, it is a matter of course that the content described in each embodiment may be included.

In addition, as described above, in the embodiments of the present invention, a bipolar type lead-acid storage battery has been described as an example. However, when the aforementioned descriptive content applies to other storage batteries in which other metals (for example, aluminum, copper, or nickel), alloys, or conductive resins are used instead of lead for a current collector, such application is naturally not excluded.

### Reference Signs List

1 Bipolar lead-acid storage battery
101 and 101A Positive lead layer (positive current collector)
102 and 102A Negative lead layer (negative current collector)
103 Positive active material layer
104 Negative active material layer
105 Electrolytic layer
110 Negative electrode
111 to 111E Substrate (bipolar plate)
120 Positive electrode
130 to 130H Bipolar electrode
140 Adhesive layer
150 Communication hole
160 to 160B Sealing member
170 to 175 Protrusion portion

## Claims

1. A bipolar storage battery comprising: a bipolar electrode including a positive electrode, a negative electrode, and a bipolar plate provided with the positive electrode on one surface and the negative electrode on another surface,
wherein the positive electrode includes a positive current collector configured to be bonded to the one surface of the bipolar plate by an adhesive,
the negative electrode includes a negative current collector configured to be bonded to the another surface of the bipolar plate by the adhesive,
the bipolar plate has a communication hole communicating the one surface and the another surface,
the positive current collector and the negative current collector are electrically joined through the communication hole, and
a partition means of partitioning a space is provided in the space between a joint portion between the positive current collector and the negative current collector and an inner surface of the communication hole.

2. The bipolar storage battery according to claim 1, wherein the partition means is a sealing member configured to seal the space between the joint portion between the positive current collector and the negative current collector and the inner surface of the communication hole.

3. The bipolar storage battery according to claim 2, wherein the inner surface of the communication hole is provided with a recessed portion in a circumferential direction in which the sealing member is fitted.

4. The bipolar storage battery according to claim 2, wherein the inner surface of the communication hole is provided with a protrusion portion in the circumferential direction to which the sealing member is fitted.

5. The bipolar storage battery according to any one of claims 2 to 4, wherein the sealing member has sulfuric acid resistance.

6. The bipolar storage battery according to any one of claims 2 to 5, wherein the sealing member is made of a fluorine-based material.

7. The bipolar storage battery according to any one of claims 2 to 6, wherein the sealing member has a diameter of 1020 or more and 110% or less of a diameter of the communication hole when the communication hole has a circular shape.

8. The bipolar storage battery according to claim 1, wherein the partition means is a protrusion portion provided on the inner surface of the communication hole along a circumferential direction.

9. The bipolar storage battery according to claim 8, wherein when the positive current collector and the negative current collector have different thicknesses, the protrusion portion is arranged at a position where a distance from a surface of the bipolar plate provided with another-side current collector having a small thickness to a center of the protrusion portion is shorter than a distance from a surface of the bipolar plate provided with a one-side current collector having a large thickness to the center of the protrusion portion.

10. The bipolar storage battery according to claim 8 or 9, wherein a protrusion amount of the protrusion portion from the inner surface to an inside of the communication hole is set so that a diameter of the communication hole and the protrusion amount are in a range of 5 : 1 to 4 : 1.

11. The bipolar storage battery according to any of claims 1 to 10, wherein the positive current collector and the negative current collector are made of lead or a lead alloy.
